(19) **Europäisches Patentamt / European Patent Office / Office européen des brevets**

(11) **EP 3 759 974 B1**

(12) # FASCICULE DE BREVET EUROPEEN

(45) Date de publication et mention de la délivrance du brevet:
**11.02.2026 Bulletin 2026/07**

(21) Numéro de dépôt: **19711973.8**

(22) Date de dépôt: **20.02.2019**

(51) Classification Internationale des Brevets (IPC):
***H04W 52/02*** *(2009.01)*

(52) Classification Coopérative des Brevets (CPC):
**H04W 52/0206; Y02D 30/70**

(86) Numéro de dépôt international:
**PCT/FR2019/050384**

(87) Numéro de publication internationale:
**WO 2019/166716 (06.09.2019 Gazette 2019/36)**

(54) **PROCÉDÉ DE MISE EN VEILLE D'UNE STATION DE BASE, PRODUIT PROGRAMME D'ORDINATEUR, DISPOSITIF, STATION DE BASE ET SIGNAL CORRESPONDANTS**

VERFAHREN ZUM PLATZIEREN EINER BASISSTATION AUF STANDBY, COMPUTERPROGRAMMPRODUKT, VORRICHTUNG, BASISSTATION UND ENTSPRECHENDES SIGNAL

METHOD OF PLACING A BASE STATION ON STANDBY, COMPUTER PROGRAM PRODUCT, DEVICE, BASE STATION AND SIGNAL CORRESPONDING THERETO

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.02.2018 FR 1851768**

(43) Date de publication de la demande:
**06.01.2021 Bulletin 2021/01**

(73) Titulaire: **Orange**
**92130 Issy-les-Moulineaux (FR)**

(72) Inventeurs:
• **PARZYSZ, Fanny**
**92326 Châtillon Cedex (FR)**
• **GOURHANT, Yvon**
**92326 Châtillon Cedex (FR)**

(74) Mandataire: **Vidon Brevets & Stratégie**
**16B, rue de Jouanet**
**BP 90333**
**35703 Rennes Cedex 7 (FR)**

(56) Documents cités:
**US-A1- 2013 070 635 US-A1- 2015 223 162**

• **CMCC: "NR Network Energy Requirement", vol. RAN WG2, no. Nanjing, China; 20160523 - 20160527, 22 May 2016 (2016-05-22), XP051105259, Retrieved from the Internet <URL:http://www.3gpp.org/ftp/ Meetings_3GPP_SYNC/RAN2/Docs/> [retrieved on 20160522]**

**Description**

## 1 DOMAINE TECHNIQUE

Le domaine de l'invention est celui de la mise en œuvre des réseaux de radiocommunication, et notamment des stations de base de tels réseaux.

L'invention se rapporte plus particulièrement à l'optimisation de l'efficacité énergétique d'une station de base d'un réseau de radiocommunication.

L'invention trouve de nombreuses applications, notamment, mais non exclusivement, dans le domaine des réseaux de radiocommunications mobiles, par exemple les réseaux cellulaires conformes aux normes 3GPP (pour « 3rd Generation Partnership Project » en anglais) de dernières générations ou futures.

## 2 ARRIERE-PLAN TECHNOLOGIQUE

Dans les pays développés, la densification des réseaux et la multiplication des terminaux du type mobiles multifonctions (« smartphones ») et autres dispositifs ou objets connectés entraîne une forte hausse de la consommation d'énergie, pour les terminaux mais aussi pour les stations de base (par exemple, les « Nodes B » selon la norme UMTS (pour « Universal Mobile Telecommunications System » en anglais), les « eNB » (pour « evolved Node B » en anglais) selon la norme LTE (pour « Long Term Evolution » en anglais) ou « gNB » (pour « next Generation Node B » en anglais) selon la norme 5G en cours de standardisation). Le coût énergétique pour maintenir un tel réseau reste élevé même pendant les périodes de faible charge, notamment la nuit.

Par ailleurs, les pays émergents souffrent encore d'une faible couverture et d'un approvisionnement en électricité incertain, qui peuvent induire des ralentissements voire des coupures du service rendu par une station de base.

Des approches ont donc été proposées pour la gestion énergétique de la partie réseau, notamment des stations de base. Par exemple, l'activation à la demande des stations de base offre une solution radicale à la réduction de l'énergie consommée en période de faible charge. Toutefois, il s'agit d'une mise en veille de longue durée du fait du délai important requis pour le rétablissement des connexions et les basculements de réception, ou transfert de charge, d'une station de base à une autre. De plus, elle ne peut s'appliquer qu'à des réseaux denses (en termes de nombre de stations de base sur un territoire donné) qui permettent à une station de base de transférer sa charge sur un ou plusieurs autres nœuds desservant une même zone géographique.

D'autres solutions ont été proposées pour remédier à ces problèmes. On peut citer par exemple des techniques de réveil de la station de base par une interface tierce (par exemple par un système LoRa®), lorsque la charge ne peut pas être transférée sur une autre station, ou la mise en place de cycles d'interruption d'émission DTX (pour « Discontinuous Transmission » en anglais). Cependant, de telles solutions ne peuvent s'appliquer que lorsque la station de base n'a aucun terminal à gérer. Ainsi, une station de base gNB ne servant qu'un seul terminal (même pour un service de voix) doit rester active et ne peut donc pas passer en état de veille selon ces méthodes connues.

On peut par ailleurs noter que des modes de veille ont été proposés pour les terminaux, d'une part en agissant sur les couches hautes, en particulier au niveau applicatif, et d'autre part, en mettant en veille les interfaces radio des terminaux, en fonction du trafic utilisateur ou des contraintes de batterie.

Cependant, ces techniques ne sont pas applicables aux stations de base qui gèrent de multiples utilisateurs, à la fois en mode veille et en mode connecté. En effet, dans une station de base, un certain nombre de signaux doivent être transmis de manière régulière et continue, même si la cellule est totalement vide. La diffusion d'une signalisation, notamment les signaux de synchronisation, reste l'obstacle majeur à l'application aux stations de base des modes de veille développés pour les terminaux mobiles.

Le document technique de normalisation 3GPP (« NR Network Energy Requirement », 3GPP DRAFT, R2-163875 NR NETWORK ENERGY REQUIREMENT, 3RD GENERATION PARTNERSHIP PROJECT (3GPP), ... col. RAN WG2, no. Nanjing, China; 2016-05-23 to 2016-05-27) propose de minimiser les signaux de signalisation, ou, dans le cas de systèmes à multiplexage en temps (e.g. GSM, TD-SCDMA, TD-LTE), de multiplexer prioritairement les données en fréquence de manière à dégager des créneaux temporels pendant lesquels les parties radio peuvent être mises en veille.

Le document de brevet US 2013/070635 A1 divulgue un procédé permettant de réaliser des économies d'énergie dans une station de base d'un système de communication mobile (e.g. dans un réseau LTE) par fermeture d'un canal de fréquence radio identifié comme ne transportant pas de trafic de multidiffusion.

Le document de brevet US 2015/223162 A1 divulgue un procédé permettant une économie d'énergie dans un réseau de communication sans fil en désactivant sélectivement la transmission de certains symboles de signaux de contrôle (e.g. les symboles CRS en LTE) dans une ou plusieurs sous-trames ou trames en liaison descendante.

L'efficacité énergétique reste un défi essentiel pour concevoir les systèmes de télécommunications, et notamment les stations de base, de demain. Il existe ainsi un besoin d'une solution d'optimisation de la consommation énergétique d'une station de base.

**1 RESUME**

Ainsi, selon un premier aspect, l'invention concerne un procédé de contrôle d'une station de base d'un réseau de radiocommunication multiplexant des données dans des intervalles de temps présentant chacun au moins une portion temporelle dite « de synchronisation » et au moins une portion temporelle dite « de données utilisateur » organisées en blocs de ressource distribués en temps et en fréquence. La portion temporelle de synchronisation comprend entre autres, les signaux destinés à maintenir le réseau fonctionnel, notamment des signaux de synchronisation. La portion temporelle de données utilisateur comprend entre autre les données destinées à au moins un terminal et la signalisation dédiée (estimation de canal, messages d'établissement des connexions, etc.).

Selon l'invention, le procédé comprend, pour au moins certains desdits intervalles de temps :

- une étape de découpage de ladite portion temporelle de données utilisateur en au moins deux sous-portions, une sous-portion temporelle active, apte à regrouper des blocs de ressource à émettre, et au moins une sous-portion temporelle ne contenant pas de blocs de ressource utilisés, dite sous-portion temporelle inactive,
- une étape de mise en veille de ladite station de base, pendant au moins une partie de la durée, en particulier toute la durée (ou à tout le moins une durée maximisée) de la ou desdites sous-portions temporelles inactives (qui peuvent s'étendre sur plusieurs dizaines de millisecondes), et
- une étape de modification de la durée totale desdits intervalles de temps, le nombre de créneaux temporels formant lesdits intervalles de temps étant choisi de façon à être un sous-multiple entier d'un nombre maximal $N_T^{max}$ de créneaux temporels, le nombre $N_T^{max}$ de créneaux temporels correspondant à une durée maximale entre deux portions temporelles de synchronisation à compter d'une référence temporelle donnée.

Ainsi, l'invention propose une solution nouvelle et inventive pour permettre la minimisation de la consommation en énergie d'une station de base même en cas de charge non nulle, i.e. même lorsque la station de base en question gère un ou plusieurs terminaux actifs. La succession d'une portion temporelle de synchronisation, d'une sous-portion active et d'une sous-portion inactive forme un cycle gDTX (« next generation Discontinuous Transmission » en anglais).

Pour ce faire, on contrôle le comportement de la station de base, et on introduit des périodes de veille, après avoir organisé les données à transmettre de façon adaptée. La diffusion périodique des signaux de synchronisation (accompagnés le cas échéant de signaux de signalisation dédiés au maintien du réseau), prévue par un standard donné implémenté par la station de base en question peut être maintenue (5G par exemple), mais en revanche la diffusion de la portion de données peut être interrompue sur une partie de la durée d'un intervalle de temps (quelques millisecondes ou dizaines de millisecondes), la station de base se mettant en veille et économisant ainsi de l'énergie. Ceci permet un arrêt d'un grand nombre de composantes de la station de base, et de s'approcher de la consommation d'énergie d'une station de base en arrêt, pour laquelle seules les fonctions de réveil sont encore actives.

La diffusion périodique d'une signalisation du maintien du réseau, notamment de signaux de synchronisation, pendant la portion temporelle de synchronisation, définit ces intervalles de temps (c'est-à-dire la durée entre deux diffusions de cette signalisation, qui peut être variable dans certains modes de réalisation) pendant lesquels les terminaux peuvent être servis par la station de base.

Par ailleurs, les blocs de ressource utilisés par les différents terminaux gérés par la station sont regroupés avec les blocs de ressource dédiés à la diffusion des signaux de synchronisation. De la sorte, une sous-portion temporelle inactive est ménagée, dont la durée peut être variable (par exemple en fonction de paramètres opérationnels comme une limitation en approvisionnement énergétique de la station de base, par exemple si celle-ci dépend d'une alimentation électrique solaire ou éolienne), pendant laquelle la station de base peut être mise en veille de sorte à réduire sa consommation sans impacter le service global obtenu dans la cellule gérée par la station de base, ou au moins en minimisant un tel impact.

Selon un mode de réalisation particulier, le procédé comprend une étape de distribution d'un ensemble des blocs de ressource portant des données d'une portion temporelle de données utilisateur à émettre dans ladite sous-portion active. Cette étape peut notamment être mise en œuvre par un planificateur, ou « scheduler », connu en lui-même.

La sous-portion active peut être fixée suffisamment large pour laisser aux différents intervenants une marge de manœuvre raisonnable pour le développement de leurs propres algorithmes de planification, ou « scheduling ».

Le procédé comprend une mise à jour de la durée de la mise en veille de la station de base en conséquence.

Ainsi, la durée de la sous-portion inactive est mise à jour, soit pour une mise en œuvre directement pendant l'intervalle de temps courant (i.e. pendant l'intervalle de temps qui comprend la portion de synchronisation donnée), soit pendant un intervalle de temps suivant.

Plus particulièrement, le procédé comprend une étape de modification du nombre de créneaux temporels $N_T$ formant un intervalle de temps.

Ainsi, la durée des intervalles de temps est adaptable, par exemple à des conditions opérationnelles de la station de base. Cet aspect, connu en lui-même notamment dans la norme 3GPP, s'avère un complément efficace à l'approche générale de l'invention.

En effet, on optimise alors dynamiquement deux valeurs : le nombre $N_T$ de créneaux temporels d'un intervalle de temps, d'une part, et le nombre N de créneaux temporels pendant lequel la station de base peut être mise en veille (c'est-à-dire les créneaux temporels formant la portion temporel inactive). La station de base ne doit donc être active que pendant $N_T$ - N créneaux temporels de l'intervalle de temps.

Plus particulièrement encore, lors de l'étape de modification de la durée totale desdits intervalles de temps, le nombre de créneaux temporels formant lesdits intervalles de temps est choisi de façon à être un sous-multiple entier d'un nombre maximal $N_T^{max}$ de créneaux temporels.

Ainsi, pour une durée d'un intervalle de temps sélectionnée parmi un ensemble de durées autorisées (prédéfinies dans une norme), une diffusion des signaux de synchronisation à des instants fixes reste obtenue périodiquement (i.e. à des instants correspondants aux multiples de $N_T^{max}$). En conséquence, un appareil tentant de se synchroniser avec la station de base selon des périodes très longues, par exemple une ou plusieurs heures, est malgré tout sûr d'être actif en même temps que la station de base.

Selon une première approche de ce mode de réalisation particulier, le procédé comprend, après une modification du nombre de créneaux temporels, une étape d'adaptation de la durée des sous-portions courantes.

Ainsi, pour conserver la diffusion des signaux de synchronisation à des instants fixes (i.e. correspondants aux multiples de $N_T^{max}$) malgré le changement de la durée des intervalles de temps, on adapte la durée d'un intervalle de transition, une telle adaptation pouvant correspondre soit à une augmentation soit à une réduction du nombre de créneaux temporels.

Selon une deuxième approche de ce mode de réalisation particulier, le procédé comprend une étape de retardement de l'application de la nouvelle durée de la sous-portion inactive, le nombre modifié de créneaux temporels se substituant au nombre courant de créneaux temporels seulement q intervalles de temps plus tard, q étant déterminé de façon à conserver une diffusion des signaux de synchronisation à des instants fixes.

Ainsi, la périodicité de l'émission de la portion de synchronisation est conservée, via la mise en œuvre d'un décalage temporel de la prise en compte de la durée modifiée.

Par exemple, dans une mise en œuvre particulière, ladite station de base diffuse lesdites portions de synchronisation au moins tous les $N_T^{max}$ créneaux temporels à compter d'une référence temporelle donnée, et met à jour à un instant donné le nombre de créneaux temporels contenu dans un intervalle de temps. Le nombre courant de créneaux temporels $N_T$ et le nombre modifié de créneaux temporels $N'_T$ sont tels que $N_T^{max} = k*N_T$ et $N_T^{max} = m*N'_T$, k et m entiers et la mise à jour a lieu lors d'une p-ème application successive du procédé de contrôle mettant en œuvre ledit nombre courant $N_T$ de créneaux temporels. La valeur modifiée $N'_T$ n'est appliquée qu'après q intervalles de temps supplémentaires constitués de $N_T$ de créneaux temporels, et pour les K intervalles de temps restants. K et q sont deux entiers tels que $kN_T = (p+q)N_T + KN'_T$ et $mN'_T = (p+q)N_T + KN'_T$. K = 0 et q = k-p si de tels entiers n'existent pas.

Selon des mises en œuvre particulières, un ou plusieurs critères de mise à jour des durées des intervalles de temps peuvent être pris en compte. Par exemple, l'étape de détermination et/ou l'étape de modification peut tenir compte notamment d'au moins un paramètre de fonctionnement appartenant au groupe comprenant :

- une requête en basculement de réception envoyée par au moins un terminal à ladite station de base ;
- une signalisation de demande ou de fin de communication, envoyée par au moins un terminal utilisateur à ladite station de base ; et
- un paramètre extérieur influençant la capacité de radiodiffusion de ladite station de base.

Ainsi, les durées d'activité et de veille de la station de base prennent en compte des conditions opérationnelles courantes de la station de base.

Le nombre N de créneaux temporels formant ladite sous-portion inactive et/ou le nombre $N_T$ formant un intervalles de temps est fixé en tenant compte d'au moins une des informations appartenant au groupe suivant :

- temps en service garanti ;
- type de trafic à transmettre ;
- disponibilité en énergie électrique.

En particulier, il est possible d'optimiser la durée globale de temps de veille, en tenant compte des différents types de trafic pour adapter en permanence les valeurs de N et/ou de $N_T$.

Selon un mode de réalisation particulier, une sous-portion temporelle active est placée temporellement immédiatement avant et/ou après une portion de synchronisation.

Ainsi, la durée de mise en veille de la station de base est maximisée. La station de base est active (se trouve « hors veille ») pendant la durée correspondant à la portion de synchronisation et à la sous-portion temporelle active, et inactive (se trouve « en veille ») pendant la sous-portion temporelle inactive.

Selon un mode de réalisation particulier, lorsqu'un terminal effectue une demande de début ou de fin de communication, ou une demande de transfert, au réseau et que cette demande peut être prise en charge par ladite station de base ou au moins une autre station de base, le procédé met en œuvre une étape de choix d'une station de base pour communiquer avec ledit terminal, tenant compte de la répartition entre les sous-portions active et inactive dans au moins une desdites stations de base.

Ainsi, on peut mettre en œuvre une optimisation de cycles globale, sur plusieurs stations de base et/ou plusieurs utilisateurs.

Les périodes de veille des stations de base du réseau peuvent être optimisées conjointement de manière à obtenir une optimisation globale de la consommation en énergie du réseau en question.

L'invention concerne également un produit programme d'ordinateur comprenant des instructions de code de programme pour l'exécution des étapes du procédé de contrôle d'une station de base d'un réseau de radiocommunication tel que décrit ci-dessus.

Selon les cas, ce programme d'ordinateur peut être présent dans une station de base, dans un contrôleur contrôlant plusieurs stations de base, ou mis en œuvre de façon virtualisée. Il peut également être distribué entre ces différents éléments.

L'invention concerne également un dispositif de contrôle d'une station de base d'un réseau de radiocommunication multiplexant des données dans des intervalles de temps présentant chacun au moins une portion temporelle de synchronisation et au moins une portion temporelle de données utilisateur organisées en blocs de ressource distribués en temps et en fréquence. Un tel dispositif comprend notamment des moyens de découpage de ladite portion temporelle de données utilisateur en au moins deux sous-portions, une sous-portion temporelle active, apte à regrouper des blocs de ressource à émettre, et au moins une sous-portion temporelle ne contenant pas de blocs de ressource utilisés, dite sous-portion temporelle inactive, des moyens de mise en veille de ladite station de base, pendant au moins une partie de la durée de la ou desdites sous-portions temporelles inactives, et des moyens de modification de la durée totale desdits intervalles de temps, le nombre de créneaux temporels formant lesdits intervalles de temps étant choisi de façon à être un sous-multiple entier d'un nombre maximal $N_T^{max}$ de créneaux temporels, le nombre $N_T^{max}$ de créneaux temporels correspondant à une durée maximale entre deux portions temporelles de synchronisation à compter d'une référence temporelle donnée.

On note ici que, selon les mises en œuvre et les développements, un tel module peut comprendre des moyens matériels (« hardware » en anglais) et/ou logiciels (« software » en anglais). Le dispositif peut également être constitué de plusieurs éléments, ou modules, distincts, matériels et/ou logiciels interagissant entre eux.

L'invention concerne encore une station de base d'un réseau de radiocommunication caractérisée en ce qu'elle comprend un tel module de contrôle.

Une telle station de base peut notamment être alimentée par des moyens de production d'énergie électrique solaire et/ou éolienne, l'approche de l'invention permettant d'optimiser la consommation, notamment en fonction de la capacité de production de ces moyens et/ou d'une charge de batterie correspondante.

L'invention concerne également un signal émis par une station de base d'un réseau de radiocommunication vers au moins un terminal, multiplexant des données dans des intervalles de temps présentant chacun au moins une portion de synchronisation et au moins une portion de données organisée en blocs de ressource distribués en temps et en fréquence.

Selon cet aspect de l'invention, ladite portion de données comprend, pour au moins certains desdits intervalles de temps :

- au moins une sous-portion active, regroupant des unités de données destinées à au moins un terminal dans au moins une sous-portion de ladite portion de données ; et
- au moins une sous-portion inactive, pendant au moins une partie de laquelle aucune émission n'a lieu.

L'invention concerne également un signal de configuration, définissant pour une station de base donnée, lesdites sous-portions active et inactive, et pouvant être échangée avec au moins une station de base voisine et/ou au moins un contrôleur, contrôlant un ensemble de stations de base, et/ou au moins un terminal utilisateur. La configuration peut, selon les cas, être assurée par le contrôleur ou par la station de base.

## 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :

- les figures 1a et 1b illustrent des terminaux connectés à une station de base ainsi que le multiplexage dans le temps et en fréquence des données échangées entre les terminaux et la station de base obtenu par application d'une technique connue ;

- la figure 2 illustre des étapes d'un procédé de contrôle de la station de base de la figure 1a selon un mode de réalisation de l'invention ;

- les figures 3a et 3b illustrent le multiplexage dans le temps et en fréquence des données échangées entre les terminaux et la station de base de la figure 1a obtenu par application du procédé de la figure 2 ;

- la figure 4 illustre un exemple de profil de puissance consommé par la station de base de la figure 1a lorsqu'elle applique le procédé de la figure 2 ;

- les figures 5a, 5b et 5c illustrent le bénéfice d'une diffusion des signaux de synchronisation par la station de base de la figure 1a à des instants fixes périodiques ;

- les figures 6a et 6b illustrent l'application d'un décalage temporel avant prise en compte de la durée modifiée des intervalles de temps selon un mode de réalisation de l'invention afin de maintenir la diffusion périodique des signaux de synchronisation telle qu'illustrée sur les figures 5a, 5b et 5c ;

- les figures 7a, 7b et 7c illustrent différentes stratégies de connexion d'un nouveau terminal à une station de base selon différents modes de réalisation de l'invention ; et

- la figure 8 présente un exemple simplifié de structure d'un module destiné à mettre en œuvre le procédé de contrôle de la figure 2 ;

- les figures 9a à 9c illustrent une optimisation des sous-portions actives, dans un cas mettant en œuvre deux types de données à transmettre.

## 5 DESCRIPTION DETAILLEE DE L'INVENTION

### 5.1 glossaire

- intervalle de temps (120) : élément de structure du signal émis par une station de base, débutant par une portion de synchronisation (périodicité des « SS-bursts » pour la 5G) ;
- portion temporelle, par la suite et par simplification également « portion » : partie, ou fenêtre, d'un intervalle de temps, à savoir :

    - portion temporelle de synchronisation (150) : partie d'un intervalle de temps, par exemple « SS blocks » selon la norme 3GPP, comprenant des signaux de synchronisation 130 et le cas échéant d'autres informations de signalisation et le cas échéant des données utilisateur (les « SS-blocks» ne sont pas transmis sur l'ensemble des ressources temps / fréquences de cette fenêtre et des données utilisateurs peuvent être schédulées dans cette fenêtre) ;
    - portion temporelle de données utilisateur (160), par la suite et par simplification également « portion de données » : deuxième partie d'un intervalle de temps, portant des données destinées aux différents terminaux en relation avec la station de base. Ces données peuvent notamment comprendre des données liées directement à la communication (voix, sons, images, données au sens large) ainsi que des éléments d'une signalisation dédiée (estimation de canal, établissement des connexions, etc.) ;

- sous-portion temporelle, par la suite et par simplification également « sous-portion » : partie d'une portion temporelle de données utilisateur, à savoir :

    - sous-portion temporelle active (300a) : partie regroupant les données utilisateur à diffuser ;
    - sous-portion temporelle inactive (300b) : partie ne contenant pas de données utilisateur, pendant laquelle la station de base peut être mise en veille ;

- bloc de ressource (140) : pavé temps-fréquence élémentaire portant des données destinées à un terminal ;

- créneau temporel (170) : élément temporel de base d'une portion de données, ou empreinte temporelle d'un bloc de ressource dans la grille temps-fréquence, par exemple un « TTI » ou « time slot » pour la 5G.

*5.2 principe général de l'invention*

Sur toutes les figures du présent document, les éléments et étapes identiques sont désignés par une même référence.

La technique décrite concerne le contrôle d'une station de base, ou d'un ensemble de stations de base, d'un réseau de radiocommunication multiplexant des données dans des intervalles de temps présentant chacun au moins une portion de synchronisation et au moins une portion de données organisées en blocs de ressource distribués en temps et en fréquence.

Plus particulièrement, le principe général de la technique décrite repose sur un regroupement, pour au moins certains des intervalles de temps, de l'ensemble des blocs de ressource portant des données destinées à au moins un terminal dans au moins une sous-portion de la portion de données, dite sous-portion active, de façon à ménager dans la portion de données utilisateur au moins une sous-portion ne contenant pas de blocs de ressource utilisés, dite sous-portion inactive.

De la sorte, la station de base peut être mise en veille pendant au moins une partie de la durée de la ou des sous-portions inactives, permettant d'économiser de l'énergie tout en limitant l'impact sur le service global obtenu. Dans la présente description, la mise en veille est maximisée, et appliquée sur toute la durée de la sous-portion inactive, et on considère que les temps de passage en veille et de réveil, qui ont lieu pendant la durée de la sous-portion inactive, font partie de la durée de mise en veille. Selon une autre interprétation, il est possible de considérer que ces phases transitoires ne font pas, au sens strict, partie du temps de veille.

L'invention permet ainsi d'optimiser dynamiquement les caractéristiques des intervalles de temps, et en conséquence la durée de mise en veille, d'une station de base, ou d'un ensemble de stations de base, notamment pour suivre les évolutions du réseau, par exemple le nombre de sessions, la QoS (qualité de service) et/ou des contraintes d'énergie.

L'optimisation peut être locale, c'est-à-dire décidée indépendamment pour chaque station de base (gNB), ou centralisée, avec une gestion conjointe de plusieurs gNB, notamment grâce à des mécanismes de type SON (« Self-organizing network » en anglais, réseau auto-organisée). Plusieurs valeurs de N peuvent également être définies pour différencier le trafic, en fonction de la QoS requise et/ou du type d'utilisateur. On peut prendre en compte par exemple :

- une différenciation de forfaits « premium » et économique ;
- une différenciation des données prioritaires (par exemple : services médicaux, appels d'urgence) et des trafics « best effort » en anglais, ou « meilleur effort » (par exemple : téléchargement d'un fichier).

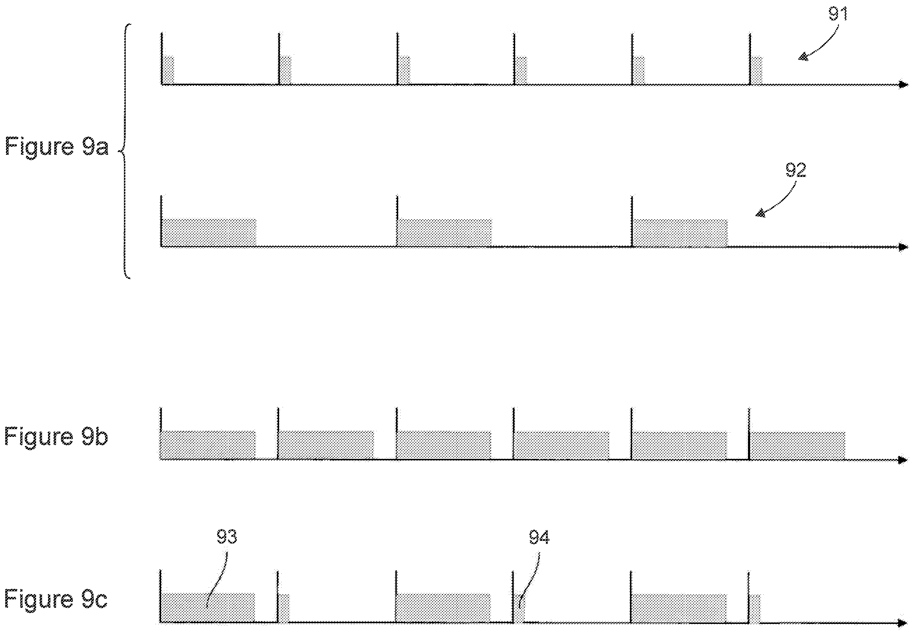

Ceci est par exemple illustré sur les figures 9a à 9c commentées par la suite.

La solution de l'invention peut aussi être intégrée dans un contexte de « network slicing » (découpage de réseau). Ce concept est un point-clé de la 5G qui permet d'adapter conjointement les configurations du RAN et du cœur pour atteindre un objectif spécifique de QoS et donc, d'assurer des communications d'applications aux contraintes très différentes, comme le « mobile broadband » (mobile large bande), ou l'IoT (internet des objets).

*5.3 rappel : structure du signal 5G*

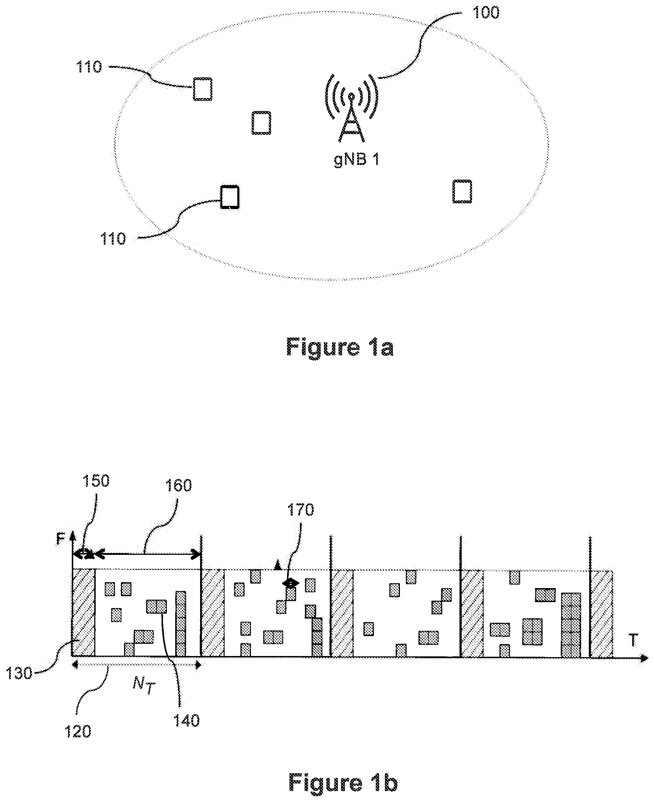

On décrit maintenant, en relation avec les **figures 1a et 1b,** le multiplexage dans le temps et en fréquence, selon une technique connue, des données échangées entre des terminaux 110 et une station de base 100 d'un réseau de radiocommunication.

Plus particulièrement, les terminaux 110 et la station de base 100 échangent des données selon la norme 5G en cours de standardisation au sein du 3GPP. Dans d'autres modes de réalisation, les terminaux 110 et la station de base 100 échangent des données selon d'autres protocoles, par exemple selon le protocole LTE (pour « Long Term Evolution » en anglais) ou LTE-Advanced.

De retour à la figure 1, la station de base 100 diffuse à intervalle régulier des signaux dédiés au maintien du réseau, notamment les signaux de synchronisation (par exemple, PSS (pour « Primary Synchronization Signal » en anglais) et SSS (pour « Secondary Synchronization Signal » en anglais)) et les signaux notifiant le paramétrage général des cellules (par exemple les canaux PBCH (pour « Physical Broadcast Channel » en anglais)). Est également transmise par la station de base 100 une signalisation relative aux données utilisateurs comme les pilotes, ou les messages pour la gestion des connexions.

Les signaux de synchronisation 130 sont regroupés dans une portion 150 dite de synchronisation. Ces portions 150 de synchronisation définissent des intervalles de temps 120 comprenant chacun une portion 150 de synchronisation et une portion 160 de données.

Plus particulièrement, selon l'art antérieur, les blocs de ressource 140 (i.e. les pavés temps-fréquence) destinés à l'échange de données entre les terminaux 110 et la station de base 100 peuvent être distribués dans toute la portion 160 de données en fonction de l'implémentation d'un planificateur ("scheduler" en anglais) et de l'arrivée de ces données ou de la signalisation associée.

Ainsi, selon la technique connue, la station de base 100 doit rester en fonctionnement en permanence pour d'une part diffuser périodiquement les signaux de synchronisation 130 dans les portions 150 de synchronisation (qui peuvent contenir également des données utilisateur et/ou d'autres informations de signalisation), et d'autre part recevoir ou émettre les blocs de ressource 140 véhiculant les données des terminaux 110 dans les portions 160 de données. Selon les techniques connues, de tels blocs de ressource 140 peuvent être assignés à un créneau temporel 170 quelconque dans la portion 160 de données. Ici, et dans le cas de la 5G, on entend par créneau temporel 170 l'empreinte temporelle d'un bloc de ressource 140 dans la grille temps-fréquence de multiplexage des blocs en question telle que prévue par le standard de radiocommunication considéré.

*5.4 mise en veille*

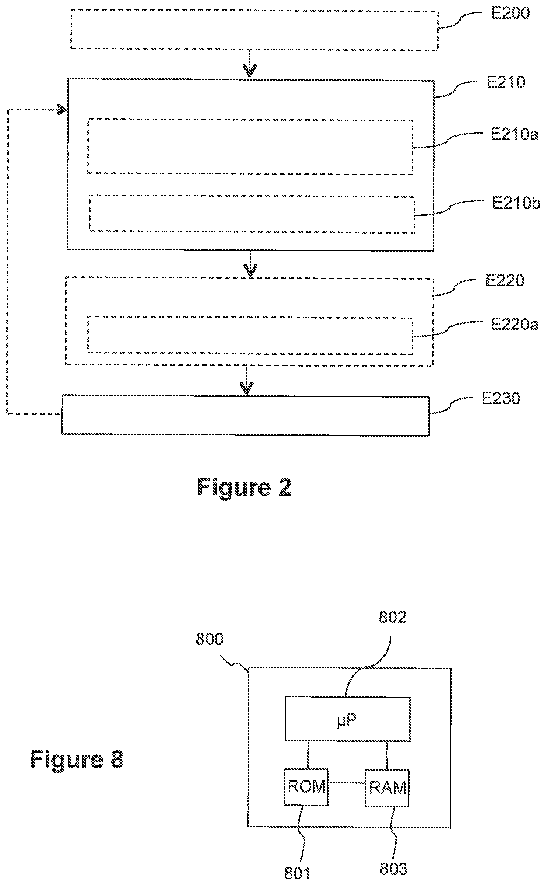

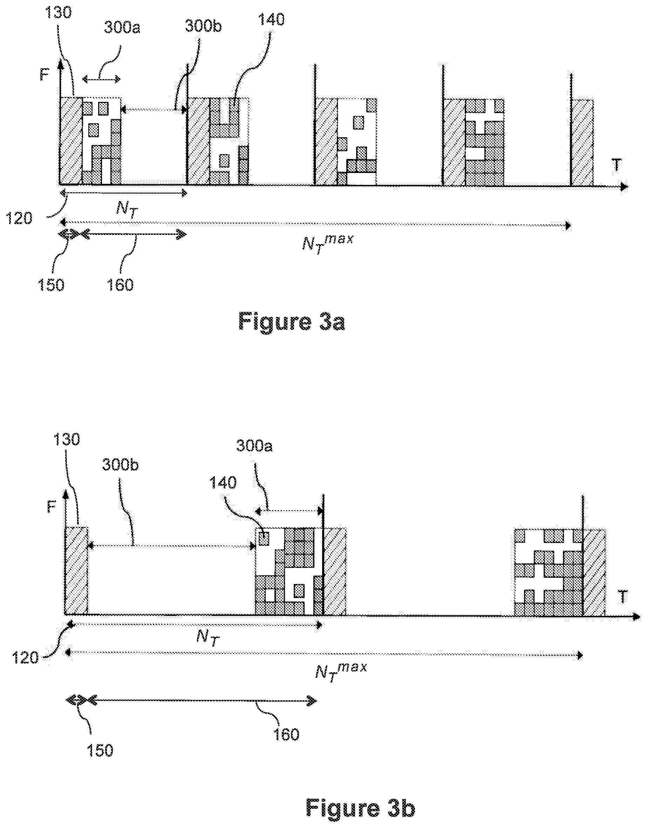

On décrit maintenant, en relation avec la **figure** 2, les étapes d'un procédé de contrôle de la station de base 100 selon différents modes de réalisation de l'invention. Par ailleurs, les étapes en question ainsi que leur mise en œuvre dans les différents modes de réalisation considérés sont illustrés par des exemples décrits en relation avec les **figures 3a et 3b, 4, 5a à 5c, 6a et 6b et 7a** à 7c.

Ainsi, pour au moins certains intervalles de temps 120, lors d'une **étape E210** d'optimisation de l'utilisation des ressources, dite de regroupement (figure 2), l'ensemble des blocs de ressource 140 portant des données destinées à au moins un terminal 110 est regroupé dans au moins une sous-portion de la portion 160 de données, dite sous-portion active 300a, de façon à ménager dans la portion 160 de données au moins une sous-portion ne contenant pas de blocs de ressource 140 utilisés, dite sous-portion inactive 300b.

De la sorte, le signal émis par la station de base 100 comprend, pour l'intervalle de temps 120 considéré, et plus précisément pour la portion temporelle de données 160 au moins une sous-portion active 300a, regroupant les données à transmettre, et au moins une sous-portion 300b inactive, pendant au moins une partie de laquelle aucune émission n'a lieu.

Ainsi, lors d'une **étape E230** (figure 2), la station de base 100 est mise en veille pendant au moins une partie de la durée de la ou des sous-portions inactive 300b.

De la sorte un cycle de mise en veille, pendant lequel la consommation de la station de base 100 est réduit (pas d'émission de données), est obtenu pendant une partie de la durée de chaque intervalle de temps 120 en question.

Par ailleurs, les terminaux 110 peuvent rester servis par la station de base 100 pendant de tels cycles de mise en veille. De la sorte, un transfert de charge de la station de base 100 vers une autre station de base du réseau peut être évité.

Dans le mode de réalisation illustré sur les figures 3a et 3b, la sous-portion active 300a est placée temporellement immédiatement avant (figure 3b) ou après (figure 3a) une portion 150 de synchronisation. De la sorte, la durée de la sous-portion inactive 300b est maximisée ainsi que la durée de mise en veille correspondante.

En variante, elle pourrait comprendre deux parties, l'une juste avant et l'autre juste après la portion de synchronisation. Dans tous les cas, les portions de synchronisation et les portions actives sont contiguës, pour former une durée unique pendant laquelle la station de base est hors veille et maximiser la période inactive pendant laquelle elle est en veille.

Dans le mode de réalisation illustré sur la figure 2, **l'étape E210** d'optimisation de l'utilisation des ressources (conduisant à un regroupement des données utilisateur) comprend :

- une **étape E210a** de découpage en sous-portion active et sous-portion inactive, comprenant la détermination d'un nombre N (maximal) de créneaux temporels consécutifs nécessaires correspondant à la sous-portion inactive 300b (et en conséquence un nombre $N_T - N$ de créneaux temporels pour la sous-portion active 300a) ; et
- une **étape E210b** de mise à jour, via une portion de signalisation donnée, de la distribution des blocs de ressources dans la sous-portion active 300a, et en conséquence des sous-portions 300a, 300b pour un intervalle de temps courant et/ou au moins un intervalle de temps suivant.

Cette opération de distribution, en tant que telle, est assurée par un planificateur (« scheduler »). Elle est adaptée en fonction de la durée sélectionnée pour la sous-portion active. Selon les mises en œuvre, l'étape E210a peut être intégrée ou non au planificateur et/ou à l'algorithme de planification correspondant.

Ainsi, suivant les variantes considérées, la durée de la sous-portion inactive est mise à jour, soit pour une mise en œuvre directement pendant l'intervalle de temps courant (i.e. pendant l'intervalle de temps qui comprend la portion 150 de synchronisation donnée), soit pendant un intervalle de temps suivant en fonction, par exemple, de conditions opérationnelles de la station de base 100.

Dans des variantes, de telles conditions opérationnelles peuvent être liées à des paramètres de fonctionnement appartenant au groupe comprenant :

- une requête en basculement de réception (ou « handover » en anglais) envoyée par au moins un terminal 110 à la station de base 100 ;
- une signalisation de demande de début ou de fin de communication envoyée par au moins un terminal 110 utilisateur à la station de base 100 ; et
- un paramètre extérieur influençant la capacité de radiodiffusion de la station de base 100 (par exemple des prévisions météorologiques pour une station de base alimentée en électricité par panneaux solaires).

L'étape E230 de mise en veille (selon l'un quelconque des modes de réalisation précités) est rebouclée sur l'étape E210 de regroupement (selon l'un quelconque des modes de réalisation précités). De la sorte, le procédé de contrôle d'une station de base est appliqué successivement à une suite d'intervalles de temps 120 de manière à suivre l'évolution dans le temps des conditions opérationnelles de la station de base 100.

Dans certains modes de réalisation, la prise en compte de cette évolution peut être assurée à distance, par un contrôleur contrôlant une pluralité de stations de base voisines, et/ou par des moyens de contrôle distants, logés par exemple dans un « cloud » (nuage) et/ou un centre de gestion (data-centers).

Il est en effet noté que les architectures des réseaux convergent vers une "virtualisation", c'est-à-dire que la station de base telle que perçue aujourd'hui pourrait, dans le futur, ressembler essentiellement à une simple antenne, la majorité des fonctions (relatives par exemple à la gestion des connexions et de la QoS) étant déportée dans des data-centers. Au final, on aura une station de base "virtuelle" et "éclatée physiquement" en RRH (« remote radio head » en anglais, tête radio distante) et BBU (« baseband unit » en anglais, unité base de bande).

Ainsi, le procédé, le dispositif ou la station de base peuvent être constitués de plusieurs éléments distribués, mis en œuvre de façon matérielle et/ou logicielle.

*5.5 illustration du gain en énergie*

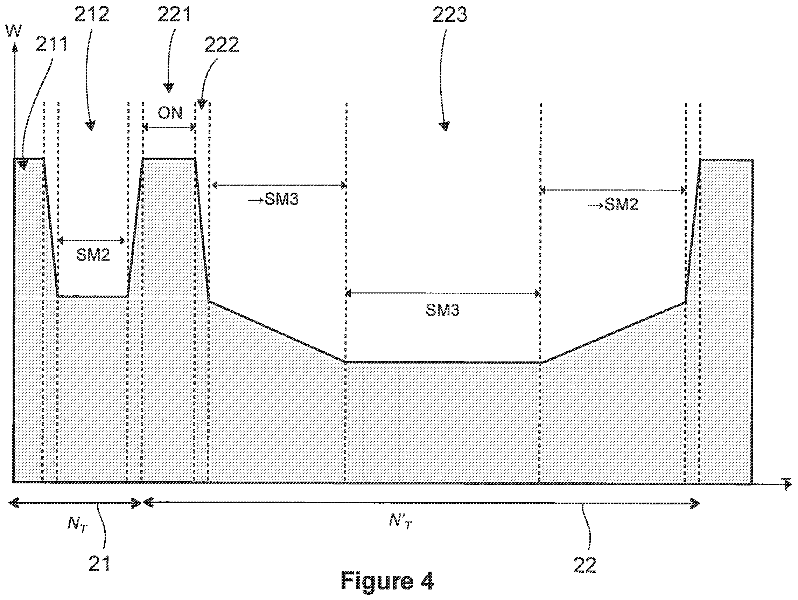

Plus particulièrement, la quantité d'énergie économisée au cours d'une période de veille n'est pas simplement linéaire avec la durée de veille en question. Il apparaît que de longues périodes de veille permettent d'atteindre des modes de fonctionnement plus économiques en permettant de suspendre l'alimentation de composants demandant de longues périodes d'extinction et/ou réveil comme illustré sur la figure 4.

En effet, en pratique la puissance de fonctionnement des composants (module RF, décodeur, etc.) de la station de base 100 peut varier entre 490W (signalement seul) et 750W (pleine charge). Cependant, la mise au repos et le réveil de ces composants ne sont pas instantanés et les possibilités de veille sont fortement limitées par le temps de transition (temps de désactivation + temps d'activation).

L'analyse de la consommation des stations de base a permis de définir 4 modes de veille (cf. *«A Flexible and Future-Proof Power Model for Cellular Base Stations »*, Björn Debaillie, Claude Desset, Filip Louagie, IEEE VTC Spring 2015*)*, ou SM (pour « Sleep Mode » en anglais) :

a) SM1 : il concerne principalement la désactivation de l'amplificateur de puissance et son temps de transition est de 71 $\mu$s ($\approx$1 symbole OFDM) seulement. La puissance de fonctionnement d'une station de base dans ce mode de veille est estimée à 157W.

b) SM2 : Pour un temps de transition de 1 ms, la puissance de fonctionnement est réduite à 42,9W.

c) SM3 : Dans ce mode de veille, la plupart des composants sont désactivés. Nécessitant 10ms de transition, ce mode permet de limiter la puissance à 28,5W.

d) SM4 : Ce mode éteint presque totalement la station de base 100 et nécessite 1s de transition. Seules demeurent actives les fonctions de réveil sur le réseau d'amené (ou « backhaul » en anglais) et la puissance de fonctionnement est égale à 24,3W.

Comme illustré sur la figure 4, pour un cycle gDTX 21 de 10ms et une période active 211 de 5ms, la gNB peut atteindre SM2 (212) et la puissance moyenne consommée est par exemple égale à :

$$(750W \times 5ms + 42,9W * 4ms + (750 – 42.9)/2W *1ms) /10ms = 431,8W$$

(le dernier terme correspond à la consommation d'énergie pendant la période de transition).

Pour un cycle gDTX 22 de 40ms et une période active 221 de 20ms, la gNB peut passer en SM2 (222), puis SM3 (223), et la puissance moyenne consommée est par exemple égale à :

$$(750W{\times}20ms+28{,}5W{*}9ms+(750{-}42{.}9)/2W{*}ms+(49{,}2{-}28{,}5)/2W{*}10ms)/40ms=392{,}8W$$

*5.6 variation de la durée des intervalles de temps*

Comme ceci est prévu dans la norme 5G en cours de développement, lors d'une **étape E220** (figure 2), la durée des intervalles de temps 120 peut être modifiée de manière à être, par exemple, également adaptable aux conditions opérationnelles précitées de la station de base 100.

Une telle flexibilité permet d'optimiser notamment la durée des sous-portions 300b d'inactivité et donc la consommation énergétique de la station de base 100 au final. En d'autres termes, l'invention propose, selon cette approche, d'optimiser d'une part la durée de la sous-portion active, en la limitant autant que possible (à $N_T$ - N créneaux temporels), et d'autre part la durée de la sous-portion inactive, en l'augmentant ($N_T$ créneaux temporels pour l'intervalle de temps). La mise en œuvre de l'invention s'appuie, selon ce mode de réalisation, sur un couple de valeur (N , $N_T$) à optimiser.

Dans d'autres modes de réalisation non illustrés sur la figure 2, les sous-portions actives et inactives 300a, 300b et/ou la durée des intervalles de temps 120 sont cependant fixes de manière à simplifier la gestion du réseau.

Allonger la durée des intervalles temporels 120 permet en effet le passage dans des modes de veille particulièrement économes (SM2, SM3 voire SM4), et apporte des gains d'énergie substantiels (cf. *« Advanced Sleep Modes and their impact on flow-level performance of 5G networks »*, Fatma Ezzahra Salem, Azeddine Gati, Zwi Altman, Tijani Chahed).

La station de base 100 peut annoncer l'organisation de ses intervalles (valeurs $N$ et $N_T$) et son cycle de veille aux terminaux 110 à proximité. De la sorte, les terminaux 110 en question peuvent synchroniser leurs propres cycles de veille, et notamment leur cycles DRX. Cette annonce peut être véhiculée par exemple via un message SIB (pour « System information blocks » en anglais). Ainsi, des gains en énergie sont obtenus à la fois pour la station de base et pour les terminaux 110. On aboutit alors à une cellule intermittente où les terminaux 110 et la station de base 100 alternent entre périodes d'activité et d'inactivité. Une telle cellule n'est donc visible que pendant les portions 150 de synchronisation et les sous-portions actives 300a.

Selon le mode de réalisation de la figure 2, l'étape E220 de modification de la durée des intervalles de temps 120 définit pour les intervalles en question un nombre de créneaux temporels qui est un sous-multiple entier d'un nombre maximal $N_T^{max}$ de créneaux temporels (Par exemple, dans le standard 5G, les signalements PSS, SSS et PBCH sont regroupés en blocs qui sont transmis avec une périodicité reconfigurable parmi les valeurs : 5, 10, 20, 40 ms...).

Ainsi, quelle que soit la durée des intervalles de temps 120 sélectionnée parmi les durées autorisées, une diffusion des signaux de synchronisation 130 à des instants 500 fixes et prédéterminés peut être obtenue périodiquement (i.e. au moins tous les $N_T^{max}$ créneaux temporels à compter d'une référence temporelle donnée).

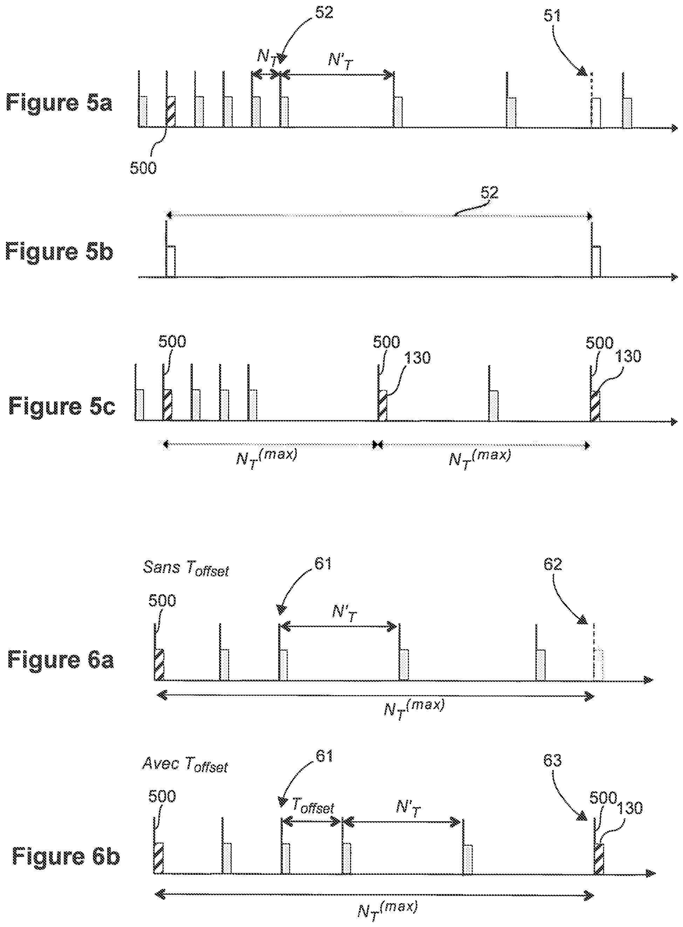

Par exemple, comme illustré sur les figures 5b et 5c, une telle diffusion des signaux de synchronisation 130 aux instants 500 fixes en question permet de faire coïncider la période active d'un terminal sortant d'une période de veille étendue (par exemple un cycle eDRX d'une ou plusieurs heures) avec un portion active de l'intervalle de temps de la station de base, même si la durée de cet intervalle a été modifiée.

Cependant, comme illustré sur la figure 6a, il se peut qu'une modification 61 de la durée des intervalles de temps entraîne un décalage 62 dans la périodicité de diffusion des signaux de synchronisation même lorsque la durée courante et la durée modifiée sont sélectionnées parmi les durées autorisées précitées.

Ainsi, afin de maintenir une diffusion des signaux de synchronisation aux instants 500 fixes, l'étape E220 de modification de la durée des intervalles de temps 120 comprend une **étape E220a** (figure 2) d'adaptation de la durée de la sous-portion inactive 300b courante (i.e. soit une augmentation soit une réduction de la durée de la sous-portion inactive).

Suivant l'exemple illustré sur les figures 6a et 6b, l'introduction d'une durée temporelle supplémentaire de correction, $T_{offset}$, pour un intervalle de temps dit de transition, permet de conserver la diffusion 63 des signaux de synchronisation aux instants 500 fixes en question malgré le changement de la durée des intervalles de temps 120 depuis la durée courante de $N_T$ créneaux temporels vers la durée modifiée de $N'_T$ créneaux temporels.

Dans d'autres exemples non illustrés, la conservation de la diffusion des signaux de synchronisation aux instants 500 fixes peut être obtenue en réduisant la durée de la sous-portion inactive.

Dans d'autres modes de réalisation non illustrés sur la figure 2, l'étape E220 de modification de la durée des intervalles de temps 120 ne comprend pas d'étape E220a d'adaptation de la durée de la sous-portion inactive 300b courante. A la place, afin de conserver la diffusion des signaux de synchronisation aux instants 500 fixes précités, le nombre modifié $N'_T$ de créneaux temporels se substitue au nombre courant $N_T$ de créneaux temporels après un nombre donné q d'applications supplémentaires du procédé de contrôle mettant en œuvre le nombre courant $N_T$ de créneaux temporels à une série de q intervalles de temps 120 successifs consécutive à l'intervalle de temps 120 courant (i.e. consécutive à l'intervalle de temps 120 pendant lequel le nombre modifié $N'_T$ est obtenu).

Ainsi, la diffusion des signaux de synchronisation aux instants 500 fixes précités est conservée de manière simple via la mise en œuvre d'itérations supplémentaires du procédé selon l'invention sur la base du nombre courant $N_T$ de créneaux temporels.

Par exemple, dans une mise en œuvre particulière, ladite station de base diffuse lesdites portions de synchronisation au moins tous les $N_T^{max}$ créneaux temporels à compter d'une référence temporelle donnée, et met à jour à un instant donné le nombre de créneaux temporels contenu dans un intervalle de temps. Le nombre courant de créneaux temporels $N_T$ et le nombre modifié de créneaux temporels $N'_T$ sont tels que $N_T^{max} = k*N_T$ et $N_T^{max} = m*N'_T$, $k$ et m entiers et la mise à jour a lieu lors d'une $p$-ème application successive du procédé de contrôle mettant en œuvre ledit nombre courant $N_T$ de créneaux temporels. La valeur modifiée $N'_T$ n'est appliquée qu'après q intervalles de temps supplémentaires constitués de $N_T$ de créneaux temporels, et pour les K intervalles de temps restants. K et q sont deux entiers tels que $kN_T = (p+q)N_T + KN'_T$ et $mN'_T = (p+q)N_T + KN'_T$. $K = 0$ et $q = k-p$ si de tels entiers n'existent pas.

### 5.7 optimisation prenant en compte au moins une autre station de base voisine

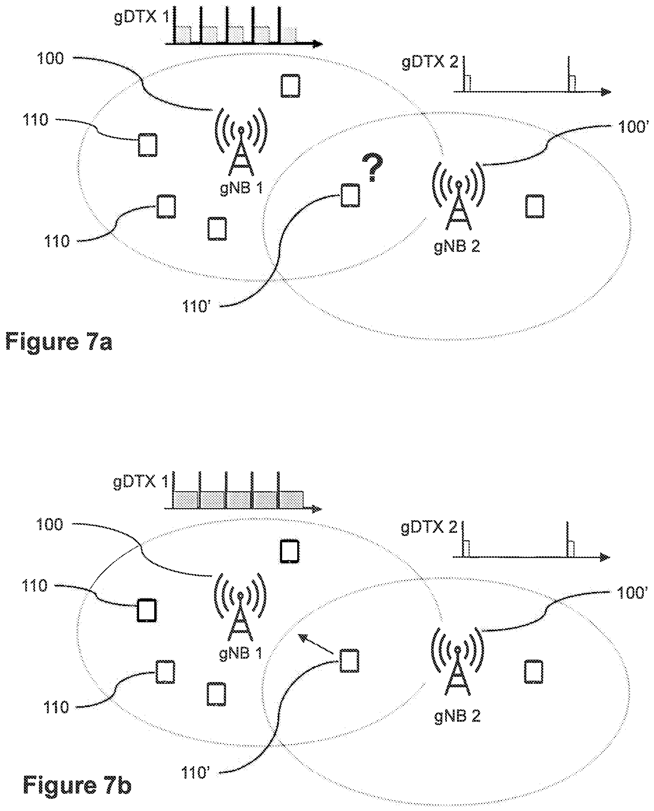

De retour à la figure 2, et en lien avec les figures 7a à 7c, lorsqu'un terminal 110' effectue par exemple une demande au réseau de début ou de fin de communication, ou de transfert à une autre station de base, et que cette connexion peut être prise en charge par la station de base 100 ou au moins une autre station de base 100', le procédé selon l'invention comprend en outre une **étape E200** de sélection d'une station de base pour le terminal 100', qui tient compte notamment de la répartition entre les sous-portions active 300a et inactive 300b dans au moins une desdites stations de base 100, 100'.

Ainsi, une optimisation centralisée des cycles de mise en veille des stations de base 100 et 100' permet de combiner la gestion des cycles en question en tenant compte des possibles transferts de charge d'une station de base à une autre (« *traffic offloading* » en anglais).

Par exemple, comme illustré sur la figure 7b, le terminal 110' peut être transférés sur la station de base 100, déjà raisonnablement active, afin de laisser la station de base 100' en état de veille avancé, par exemple en SM2, SM3 ou SM4.

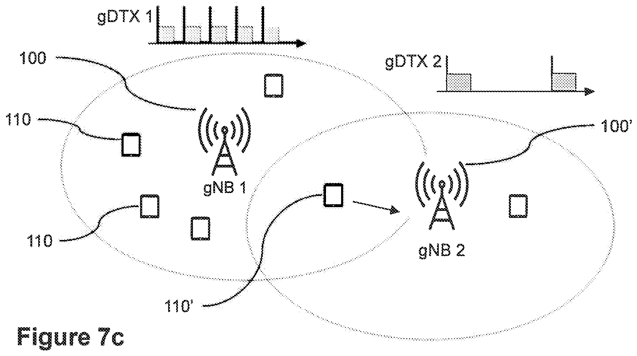

*A contrario,* comme illustré sur la figure 7c, si un trafic additionnel empêche la station de base 100 de mettre en œuvre un regroupement de blocs de ressource 140 de sorte à obtenir une sous-portion inactive 300b pour pouvoir se maintenir dans un état de veille, il peut être préférable de laisser le terminal 110' être servi par la station de base 100' afin de pouvoir obtenir un cycle de mise en veille pour chacune des deux stations de base 100, 100' (cf. les profils respectifs de cycles de veille gDTX1 et gDTX2).

Comme déjà mentionné, les décisions correspondantes peuvent être prises par un contrôleur contrôlant plusieurs stations de base et/ou de façon virtualisée, par exemple via un data-center.

### 5.8 possibilité d'adaptation en fonction du type de trafic

Selon un aspect de l'invention, il est possible d'adapter, ou plutôt de différencier, les valeurs $N$ et $N_T$ selon le type de trafic. Par type de trafic, on peut entendre une différenciation par qualité de service requise, ou QCI (QoS Class Identifier - 4G /5G), par « network slicing », mais aussi, par exemple, en différenciant les données utilisateur (data) de la signalisation (par exemple, les ACK). Une station de base qui gère plusieurs types de trafic adapte donc son cycle gDTX en fonction de chaque utilisation et non en fonction de l'utilisation la plus contraignante.

Un exemple d'adaptation est illustré par les figures 9a à 9b. La figure 9a illustre deux types de trafic distincts, le premier (91) requérant une faible latence (périodicité forte) mais peu de ressources, le deuxième (92) nécessitant en revanche plus de ressources (soit un N plus petit), mais avec une contrainte de délai moins forte.

Pour transmettre l'ensemble des données correspondants aux deux trafics, une approche directe (sans différentiation) conduirait à la situation illustrée sur la figure 9b : on retient les valeurs de $N$ et $N_T$ les plus faibles, ce qui conduit à un temps de veille réduit. En revanche, en tenant compte de la différenciation des contenus, il est possible d'en optimiser la transmission, comme illustré sur la figure 9c, pour obtenir des temps de veille beaucoup plus importants. Par exemple, on conserve la valeur $N_T$ du premier type de trafic (la plus faible), mais on transmet alternativement :

- des sous-portions actives 93, contenant des données relatives aux deux trafics 91 et 92 ; et
- des sous-portions actives 94, ne contenant que des données relatives au trafic 91.

Ainsi, on respecte la QoS (qualité de service) requise pour chaque type de trafic, tout en augmentant les temps de veille.

*5.9 mise en œuvre du procédé dans un dispositif technique*

La **figure** 8 présente schématiquement un exemple de module 800 de contrôle de la station de base 100. Un tel module 800 permet la mise en œuvre du procédé de contrôle de la figure 2. Le module 800 comprend ici une mémoire vive 803 (par exemple une mémoire RAM), une unité de traitement 802 équipée par exemple d'un processeur, et pilotée par un programme d'ordinateur stocké dans une mémoire morte 801 (par exemple une mémoire ROM ou un disque dur). A l'initialisation, les instructions de code du programme d'ordinateur sont par exemple chargées dans la mémoire vive 803 avant d'être exécutées par le processeur de l'unité de traitement 802.

Cette figure 8 illustre seulement une manière particulière, parmi plusieurs possibles, de réaliser les moyens techniques compris dans le module 800, afin qu'il effectue au moins certaines étapes du procédé de contrôle détaillé ci-dessus, par exemple en relation avec la figure 2 (dans l'un quelconque des différents modes de réalisation). En effet, ces étapes peuvent être réalisées indifféremment sur une machine de calcul reprogrammable (un ordinateur, un processeur ou un microcontrôleur) exécutant un programme comprenant une séquence d'instructions, ou sur une machine de calcul dédiée (par exemple un ensemble de portes logiques ou tout autre module matériel). Dans le cas où les moyens compris dans le module 800 sont réalisés avec une machine de calcul reprogrammable, le programme correspondant (c'est-à-dire la séquence d'instructions) pourra être stocké dans un médium de stockage amovible ou non, ce médium de stockage étant lisible partiellement ou totalement par un ordinateur ou un processeur. Il peut également être téléchargé, via tout moyen de transmission adapté.

Dans certains modes de réalisation, un tel module 800 est inclus dans la station de base 100.

Dans d'autre modes de réalisation, le module selon l'invention peut être un logiciel embarqué par exemple dans le planificateur (« scheduler »), le logiciel global de pilotage de la station de base, ou être un logiciel dédié. Le module peut comprendre des éléments matériels (« hardware ») et/ou des éléments logiciels (« software »).

Par ailleurs, l'invention peut être mise en œuvre en partie en dehors d'une station de base. Notamment, les opérations de détermination des durées des sous-portions active et inactive peuvent être réalisées, selon les cas, par la station de base ou par un contrôleur, contrôlant plusieurs stations de base voisines, et optimisant globalement les durées des sous-portions active et inactive de chaque station de base, en tenant compte de différents aspects (par exemple les réserves d'énergie de chaque cellule). Le procédé, le produit programme d'ordinateur et/ou le module peuvent aussi être distribués entre ce contrôleur et les stations de base.

*5.10 Compatibilité avec les DRX (réception discontinue) des UEs (équipement utilisateur) et gestion des dispositifs IoT (internet des objets)*

La solution proposée n'entrave pas les cycles DRX, eDRX et PSM (mode d'économie d'énergie), utilisés en particulier pour les dispositifs IoT. En effet :

1) A l'opposé des techniques proposées antérieurement (notamment dans le cadre de l'IoT), la gNB n'adapte pas son cycle de veille gDTX aux cycles DRX des UEs, mais annonce son cycle gDTX aux UEs afin de leur permettre de synchroniser leur cycle DRX. Ainsi, l'implémentation du cycle gDTX assure des gains en énergie à la fois pour les gNB mais aussi pour les UEs.

2) La synchronisation DRX/gDTX peut être réalisée en ajustant les paramètres du cycle DRX, tel que défini par la norme 3GPP. Par exemple, pour un UE en mode RRC_CONNECTED, le temporisateur (« timer » en anglais) « OnDuration » est fixé au maximum à $N_T$ - N créneaux temporels et la valeur pour « DRXShortCycle » est configurée à $N_T$. Le temporisateur d'inactivité « DRX-InactivityTimer » peut être mis à zéro pour que l'UE démarre immédiatement son cycle DRX. A la fin d'une temporisation « DRXShortCycleTimer » (c'est-à-dire si aucune donnée n'a été reçue), l'UE bascule dans un cycle long qui peut être configuré de la même manière.

3) Les cycles eDRX (« extended DRX » en anglais) et les PSM (« Power saving mode » en anglais), sont utilisés principalement pour les dispositifs IoT et peuvent constituer un obstacle à l'optimisation des paramètres $N$ et $N_T$. En effet, un cycle eDRX ou PSM d'un device IoT peut atteindre plusieurs heures. Il est donc possible que la gNB ait modifié intervalle de temps $N_T$ pendant la période de veille du dispositif IoT, et par conséquent, que ce dispositif se réveille pendant la sous-portion inactive de la gNB.

4) En garantissant une période d'activité sur une base fixe de $N_T^{(max)}$ créneaux temporels (par exemple 80ms), l'invention supporte l'implémentation des cycles eDRX et PSM. Il suffit que les temporisateurs correspondants, mais aussi la TAU (« Tracking Area Update » en anglais ou mise à jour de location) soient synchronisés sur les périodes d'activité garantie, c'est-à-dire qu'ils soient égaux à un multiple de $N_T^{(max)}$. Ainsi, un UE (smartphone ou dispositif IoT) peut passer en état de veille pour $n \times N_T^{(max)}$ créneaux temporels, Vn E N,et être assuré de trouver la gNB en activité à son réveil, quelle que soit les modifications apportées à N$_T$ ou N. Dans le cas particulier du PSM, l'arrivée de données à transmettre en voie montante (« uplink » en anglais) déclenche également le réveil de l'UE. Elle n'est alors soumise qu'à un délai additionnel maximal de $N_T^{(max)}$ créneaux temporels.

5) Un décalage temporel (« time offset » en anglais, $T_{offser}$) peut être utilisé en cas de modification du paramètre N$_T$. Ceci revient, par exemple, à retarder de quelques cycles l'application d'une nouvelle valeur pour N$_T$ afin de garantir une sous-portion active tous les $N_T^{(max)}$ créneaux temporels. Cet offset peut aussi être employé pour faciliter la transition entre l'annonce d'un nouveau cycle et son application effective auprès des UEs.

**Revendications**

1. Procédé de contrôle d'une station de base (100) d'un réseau de radiocommunication multiplexant des données dans des intervalles de temps (120) présentant chacun au moins une portion temporelle de synchronisation (150) et au moins une portion temporelle (160) de données utilisateur organisées en blocs de ressource (140) distribués en temps et en fréquence, un intervalle de temps étant formé de créneaux temporels, un créneau temporel correspond à une empreinte temporelle d'un bloc de ressource distribué en temps et en fréquence, **caractérisé en ce qu'**il comprend, pour au moins certains desdits intervalles de temps (120) :

   - une étape de découpage (E210a) de ladite portion temporelle de données utilisateur en au moins deux sous-portions, une sous-portion temporelle active (300a), apte à regrouper des blocs de ressource à émettre, et au moins une sous-portion temporelle ne contenant pas de blocs de ressource utilisés, dite sous-portion temporelle inactive (300b),
   - une étape de mise en veille (E230) de ladite station de base, pendant au moins une partie de la durée de la ou desdites sous-portions temporelles inactives, et
   - une étape de modification (E220) de la durée totale desdits intervalles de temps, le nombre de créneaux temporels formant lesdits intervalles de temps étant choisi de façon à être un sous-multiple entier d'un nombre maximal N$_T$$^{max}$ de créneaux temporels, le nombre N$_T$$^{max}$ de créneaux temporels correspondant à une durée maximale entre deux portions temporelles de synchronisation à compter d'une référence temporelle donnée.

2. Procédé selon la revendication 1, **caractérisé en ce qu'**une sous-portion temporelle active (300a) est placée temporellement immédiatement avant et/ou après une portion de synchronisation (150).

3. Procédé selon la revendication 1, **caractérisé en ce que** le nombre N de créneaux temporels formant ladite sous-portion inactive (300b) et/ou le nombre N$_T$ formant un intervalle de temps est fixé en tenant compte d'au moins une des informations appartenant au groupe suivant :

   - temps en service garanti ;
   - type de trafic à transmettre ;
   - disponibilité en énergie électrique.

4. Procédé selon la revendication 1, **caractérisé en ce qu'**il comprend, après une modification du nombre de créneaux temporels N$_T$ formant un intervalle de temps, une étape d'adaptation (E220a) de la durée d'une sous-portion inactive courante.

5. Procédé selon la revendication 1, **caractérisé en ce qu'**il comprend, après une modification du nombre de créneaux temporels N$_T$ formant un intervalle de temps, une étape de retardement de l'application de la nouvelle durée de la sous-portion inactive, le nombre modifié de créneaux temporels se substituant au nombre courant de créneaux temporels seulement q intervalles de temps plus tard, q étant déterminé de façon à conserver une diffusion des signaux de synchronisation à des instants fixes.

6. Procédé selon la revendication 1, **caractérisé en ce que**, lorsqu'un terminal peut être pris en charge par ladite station de base ou au moins une autre station de base, le procédé met en œuvre une étape de choix d'une station de base pour communiquer avec ledit terminal, tenant compte de la répartition entre les sous-portions active et inactive dans au moins une desdites stations de base.

7. Produit programme d'ordinateur comprenant des instructions de code de programme pour l'exécution des étapes du procédé de contrôle d'une station de base d'un réseau de radiocommunication, selon l'une quelconque des revendications 1 à 6 lorsque ledit programme est exécuté par un microprocesseur.

8. Dispositif de contrôle d'une station de base d'un réseau de radiocommunication multiplexant des données dans des intervalles de temps présentant chacun au moins une portion temporelle de synchronisation et au moins une portion temporelle de données utilisateur organisées en blocs de ressource distribués en temps et en fréquence, un intervalle de temps étant formé de créneaux temporels, un créneau temporel correspond à une empreinte temporelle d'un bloc de ressource distribué en temps et en fréquence,

caractérisé en ce qu'il comprend des moyens de découpage de ladite portion temporelle de données utilisateur en au moins deux sous-portions, une sous-portion temporelle active, apte à regrouper des blocs de ressource à émettre, et au moins une sous-portion temporelle ne contenant pas de blocs de ressource utilisés, dite sous-portion temporelle inactive,
des moyens de mise en veille de ladite station de base, pendant au moins une partie de la durée de la ou desdites sous-portions temporelles inactives,
et des moyens de modification de la durée totale desdits intervalles de temps, le nombre de créneaux temporels formant lesdits intervalles de temps étant choisi de façon à être un sous-multiple entier d'un nombre maximal $N_T^{max}$ de créneaux temporels, le nombre $N_T^{max}$ de créneaux temporels correspondant à une durée maximale entre deux portions temporelles de synchronisation à compter d'une référence temporelle donnée.

9. Station de base ou groupe de stations de base d'un réseau de radiocommunication caractérisée en ce qu'elle comprend au moins un dispositif selon la revendication 8.

**Patentansprüche**

1. Verfahren zur Steuerung einer Basisstation (100) eines Funkkommunikationsnetzes, das Daten in Zeitintervallen (120) multiplext, die jeweils mindestens einen zeitlichen Synchronisationsabschnitt (150) und mindestens einen zeitlichen Benutzerdatenabschnitt (160) aufweisen, die in zeit- und frequenzverteilten Ressourcenblöcken (140) organisiert sind, wobei ein Zeitintervall aus Zeitschlitzen gebildet wird, wobei ein Zeitschlitz einem Zeitstempel eines zeit- und frequenzverteilten Ressourcenblocks entspricht, dadurch gekennzeichnet, dass es zumindest für einige der Zeitintervalle (120) Folgendes umfasst:

- einen Schritt des Zerteilens (E210a) des zeitlichen Benutzerdatenabschnitts in mindestens zwei Unterabschnitte, einen aktiven zeitlichen Unterabschnitt (300a), der zu sendende Ressourcenblöcke gruppieren kann, und mindestens einen zeitlichen Unterabschnitt, der keine verwendeten Ressourcenblöcke enthält, als inaktiver zeitlicher Unterabschnitt (300b) bezeichnet,
- einen Schritt des Versetzens in Standby (E230) der Basisstation für mindestens für einen Teil der Dauer des oder der inaktiven zeitlichen Unterabschnitte und
- einen Schritt des Änderns (E220) der Gesamtdauer der Zeitintervalle, wobei die Anzahl der Zeitschlitze, die die Zeitintervalle bilden, so gewählt wird, dass sie ein ganzzahliger Teiler einer Höchstanzahl $N_T^{max}$ von Zeitschlitzen ist, wobei die Anzahl $N_T^{max}$ von Zeitschlitzen einer maximalen Dauer zwischen zwei zeitlichen Synchronisationsabschnitten gerechnet ab einer gegebenen zeitlichen Referenz entspricht.

2. Verfahren nach Anspruch 1, dadurch gekennzeichnet, dass ein aktiver zeitlicher Unterabschnitt (300a) zeitlich unmittelbar vor und/oder nach einem Synchronisationsabschnitt (150) platziert wird.

3. Verfahren nach Anspruch 1, dadurch gekennzeichnet, dass die Anzahl N von Zeitschlitzen, die den inaktiven Unterabschnitt (300b) bilden, und/oder die Anzahl $N_T$, die ein Zeitintervall bilden, unter Berücksichtigung mindestens einer der Informationen der folgenden Gruppe festgelegt ist:

- garantierte Dienstzeit;
- Art des zu übertragenden Verkehrs;
- Verfügbarkeit von Strom.

4. Verfahren nach Anspruch 1, dadurch gekennzeichnet, dass es nach einer Änderung der Anzahl von Zeitschlitzen $N_T$, die ein Zeitintervall bilden, einen Schritt des Anpassens (E220a) der Dauer eines aktuellen inaktiven Unterabschnitts umfasst.

**EP 3 759 974 B1**

5. Verfahren nach Anspruch 1, **dadurch gekennzeichnet, dass** es nach einer Änderung der Anzahl von Zeitschlitzen $N_T$, die ein Zeitintervall bilden, einen Schritt des Verzögerns der Anwendung der neuen Dauer des inaktiven Unterabschnitts umfasst, wobei die geänderte Anzahl von Zeitschlitzen die aktuelle Anzahl von Zeitschlitzen erst q Zeitintervalle später ersetzt, wobei q so bestimmt wird, dass eine Aussendung der Synchronisationssignale zu festgelegten Zeitpunkten erhalten bleibt.

6. Verfahren nach Anspruch 1, **dadurch gekennzeichnet, dass**, wenn ein Terminal von der Basisstation oder mindestens einer anderen Basisstation übernommen werden kann, das Verfahren einen Schritt des Auswählens einer Basisstation zur Kommunikation mit dem Terminal unter Berücksichtigung der Aufteilung zwischen dem aktiven und dem inaktiven Unterabschnitt in mindestens einer der Basisstationen umsetzt.

7. Computerprogrammprodukt, umfassend Programmcodeanweisungen zur Ausführung der Schritte des Verfahrens zur Steuerung einer Basisstation eines Funkkommunikationsnetzes nach einem der Ansprüche 1 bis 6, wenn das Programm von einem Mikroprozessor ausgeführt wird.

8. Vorrichtung zur Steuerung einer Basisstation eines Funkkommunikationsnetzes, das Daten in Zeitintervallen multiplext, die jeweils mindestens einen zeitlichen Synchronisationsabschnitt und mindestens einen zeitlichen Benutzerdatenabschnitt aufweisen, die in zeit- und frequenzverteilten Ressourcenblöcken organisiert sind, wobei ein Zeitintervall aus Zeitschlitzen gebildet wird, wobei ein Zeitschlitz einem Zeitstempel eines zeit- und frequenzverteilten Ressourcenblocks entspricht,

**dadurch gekennzeichnet, dass** sie Folgendes beinhaltet: Mittel zum Zerteilen des zeitlichen Benutzerdatenabschnitts in mindestens zwei Unterabschnitte, einen aktiven zeitlichen Unterabschnitt, der zu sendende Ressourcenblöcke gruppieren kann, und mindestens einen zeitlichen Unterabschnitt, der keine verwendeten Ressourcenblöcke enthält, als inaktiver zeitlicher Unterabschnitt bezeichnet,
Mittel zum Versetzen der Basisstation in Standby für mindestens für einen Teil der Dauer des oder der inaktiven zeitlichen Unterabschnitte
und Mittel zum Ändern der Gesamtdauer der Zeitintervalle, wobei die Anzahl der Zeitschlitze, die die Zeitintervalle bilden, so gewählt wird, dass sie ein ganzzahliger Teiler einer Höchstanzahl $N_T^{max}$ von Zeitschlitzen ist, wobei die Anzahl $N_T^{max}$ von Zeitschlitzen einer maximalen Dauer zwischen zwei zeitlichen Synchronisationsabschnitten gerechnet ab einer gegebenen zeitlichen Referenz entspricht.

9. Basisstation oder Gruppe von Basisstationen eines Funkkommunikationsnetzes, **dadurch gekennzeichnet, dass** sie mindestens eine Vorrichtung nach Anspruch 8 umfasst.

**Claims**

1. Method for controlling a base station (100) of a radiocommunication network multiplexing data in time intervals (120) each having at least one synchronization time portion (150) and at least one time portion (160) of user data which are organized in resource blocks (140) distributed in time and in frequency, a time interval being formed of time slots, a time slot corresponding to a time print of a resource block distributed in time and in frequency, **characterized in that** it comprises, for at least some of said time intervals (120):

- a step of dividing (E210a) said time portion of user data into at least two subportions, an active time subportion (300a), which is able to group resource blocks to be transmitted, and at least one time subportion not containing used resource blocks, referred to as an inactive time subportion (300b),
- a step of putting said base station on standby (E230) for at least part of the duration of said one or more inactive time subportions, and
- a step of modifying (E220) the total duration of said time intervals, the number of time slots forming said time intervals being chosen so as to be an integer submultiple of a maximum number $N_T^{max}$ of time slots, the number $N_T^{max}$ of time slots corresponding to a maximum duration between two synchronization time portions starting from a given time reference.

2. Method according to Claim 1, **characterized in that** an active time subportion (300a) is placed temporally immediately before and/or after a synchronization portion (150).

3. Method according to Claim 1, **characterized in that** the number N of time slots forming said inactive subportion (300b)

15

and/or the number $N_T$ forming a time interval is set taking account of at least one of the items of information belonging to the following group:

- guaranteed time in service;
- type of traffic to be transmitted;
- availability of electrical energy.

4. Method according to Claim 1, **characterized in that** it comprises, after a modification of the number of time slots $N_T$ forming a time interval, a step of adapting (E220a) the duration of a current inactive subportion.

5. Method according to Claim 1, **characterized in that** it comprises, after a modification of the number of time slots $N_T$ forming a time interval, a step of delaying the application of the new duration of the inactive subportion, the modified number of time slots being substituted for the current number of time slots only q time intervals later, q being determined so as to keep broadcasting the synchronization signals at set times.

6. Method according to Claim 1, **characterized in that**, when a terminal can be taken charge of by said base station or at least one other base station, the method implements a step of choosing a base station to communicate with said terminal, taking account of the distribution between the active subportion and inactive subportion in at least one of said base stations.

7. Computer program product comprising program code instructions for executing the steps of the method for controlling a base station of a radiocommunication network according to any one of Claims 1 to 6 when said program is executed by a microprocessor.

8. Device for controlling a base station of a radiocommunication network multiplexing data in time intervals each having at least one synchronization time portion and at least one time portion of user data which are organized in resource blocks distributed in time and in frequency, a time interval being formed of time slots, a time slot corresponding to a time print of a resource block distributed in time and in frequency,

**characterized in that** it comprises means for dividing said time portion of user data into at least two subportions, an active time subportion, which is able to group resource blocks to be transmitted, and at least one time subportion not containing used resource blocks, referred to as an inactive time subportion,
means for putting said base station on standby for at least part of the duration of said one or more inactive time subportions,
and means for modifying the total duration of said time intervals, the number of time slots forming said time intervals being chosen so as to be an integer submultiple of a maximum number $N_T^{max}$ of time slots, the number $N_T^{max}$ of time slots corresponding to a maximum duration between two synchronization time portions starting from a given time reference.

9. Base station or group of base stations of a radiocommunication network, **characterized in that** it comprises at least one device according to Claim 8.

Figure 1a

Figure 1b

**Figure 3a**

**Figure 3b**

Figure 4

Figure 5a

Figure 5b

Figure 5c

Figure 6a

Figure 6b

gDTX 1

100

110

110

gNB 1

?

110'

gDTX 2

100'

gNB 2

**Figure 7a**

gDTX 1

100

110

110

gNB 1

110'

gDTX 2

100'

gNB 2

**Figure 7b**

Figure 7c

Figure 9a

Figure 9b

Figure 9c

EP 3 759 974 B1

## RÉFÉRENCES CITÉES DANS LA DESCRIPTION

**Documents brevets cités dans la description**

- US 2013070635 A1

- US 2015223162 A1

**Littérature non-brevet citée dans la description**

- 3GPP DRAFT, R2-163875 NR NETWORK ENERGY REQUIREMENT, 3RD GENERATION PARTNERSHIP PROJECT (3GPP). *NR Network Energy Requirement*, 23 May 2016

- **BJÖRN DEBAILLIE** ; **CLAUDE DESSET** ; **FILIP LOUAGIE**. A Flexible and Future-Proof Power Model for Cellular Base Stations. IEEE VTC Spring, 2015